# EUROPÄISCHE PATENTANMELDUNG

(11) **EP 1 074 322 A1**
(43) Veröffentlichungstag der Anmeldung: **07.02.2001**
(21) Anmeldenummer: 00115201.6
(22) Anmeldetag: 13.07.2000
(51) Int. Cl.: B23B 31/02

(54) **Rotierendes Futter**

(30) Priorität: 06.08.1999 DE 29913743 U
(71) Anmelder: Emuge-Werk Richard Glimpel Fabrik für Präzisionswerkzeuge (vormals Moschkau & Glimpel), D-91207 Lauf (DE)
(72) Erfinder: Graf, Kurt, 90542 Eckental-Herpersdorf (DE); Weidner, Horst, 91207 Lauf (DE)
(74) Vertreter: Matschkur, Peter

(57) **Zusammenfassung**

Rotierendes Futter (1) mit einer Kühl-Schmiermitel-Zuführeinrichtung, die das Kühl-Schmiermitel von einem im Spannfutter für das Werkzeug (4), insbesondere einem Bohrer oder Fräser, angeordnete Zuführkanal (7) längs des Außenmantels des Werkzeugs zu dessen Spitze leitet, wobei das Spannfutter ein Schrumpffutter ist und dass in der Aufnahmebohrung des Schrumpffutters axiale, mit dem Zuführkanal verbundene Nuten (6) angeordnet sind.

## Beschreibung

Die Erfindung bezieht sich auf ein rotierendes Futter mit einer Kühl-Schmiermittel-Zuführeinrichtung, die das Kühl-Schmiermittel von einem im Spannfutter für das Werkzeug, insbesondere einem Bohrer oder Fräser, angeordnete Zuführkanal längs des Außenmantels des Werkzeugs zu dessen Spitze leitet.

Zur Kühlung und/oder Schmierung eines Bohrers ist es üblich ein Kühl-Schmiermittel zu verwenden, wobei die Zuführung dieses Kühl-Schmiermittels zum eigentlichen Arbeitsbereich, wo die spanabhebende Bearbeitung erfolgt und die entstehende Wärme abgeführt werden soll, in unterschiedlicher Weise erfolgen kann.

Neben Anordnungen, bei denen durch eine geneigte Düse das Kühl-Schmiermittel von der Seite auf den Arbeitsbereich aufgesprüht wird, sind auch bereits Anordnungen bekanntgeworden, bei denen das Schmiermittel zentral über das Spannfutter von hinten an den Bohrer herangebracht und dann entweder durch einen Längskanal im Bohrer oder aber durch seitliche Verteilkanäle am Außenmantel des Werkzeugs zu dessen Spitze geleitet wird.

Das Vorsehen einer zentralen Zuführbohrung im eigentlichen Werkzeug selbst führt zu einer nicht unbeträchtlichen Schwächung des Werkzeugs, so dass eine solche Lösung, insbesondere für kleine Durchmesser nicht mehr geeignet ist.

Das Vorsehen von Kühlmittelkanälen an der Außenseite des Werkzeugs, wie es beispielsweise in der EP 0 419 428 B1 oder EP 0 556 801 B1 beschrieben ist, bedeutet zum einen einen erheblichen Aufwand bei der Fertigung der Werkzeuge, da solche teilweise noch gedrillten Führungsnuten am Außenumfang nur mit erheblichem Aufwand in die gehärteten Materialien eingebracht werden können. Die äußeren Führungsnuten zum Ableiten des Kühl-Schmiermittels zum Kopf des Werkzeugs sind dabei außerhalb des eigentlichen Spannbereichs des Werkzeugs angeordnet, so dass sie dort teilweise durch äußere Hülsen daran gehindert werden, nach außen radial weggeschleudert zu werden.

Der Erfindung liegt daher die Aufgabe zugrunde, ein Werkzeug der eingangs genannten Art so auszugestalten, dass es bei einfachem Aufbau eine gute Halterung des Werkzeugs auch im Dauerbetrieb gewährleistet.

Zur Lösung dieser Aufgabe ist erfindungsgemäß vorgesehen, ist erfindungsgemäß vorgesehen, dass das Spannfutter ein Schrumpffutter ist und dass in der Aufnahmebohrung des Spannfutters axiale, mit dem Zuführkanal verbundene Nuten angeordnet sind.

Schrumpffutter sind an sich bekannt, wobei bei Schrumpffuttern die Funktionsweise darin besteht, dass man zunächst durch eine äußere Energiezufuhr das Futter erwärmt, so dass auf diese Art und Weise die Aufnahmebohrung für das Werkzeug vergrößert wird. Nach dem Einstecken des Werkzeugs, also beispielsweise eines Bohrer, wird das Schrumpffutter möglichst rasch abgekühlt und schließt sich dann beim Zusammenziehen fest um den Spannschaft des Werkzeugs. Hinsichtlich der Zuführung eines Kühl-Schmiermittels gelten dabei dann die gleichen Schwierigkeiten, wie sie vorstehend anhand von üblichen Spannfuttern beschrieben worden sind.

Durch Vorsehen der axialen Nuten in der Aufnahmebohrung des Spannfutters ergibt sich die Möglichkeit, das Kühl-Schmiermittel außen am Werkzeug entlang zu führen, ohne dass hierfür in aufwendiger Weise jedes Werkzeug mit derartigen Nuten versehen werden muss. Man kann also völlig handelsübliche Werkzeuge verwenden. Ein weiterer Vorteil der Führung des Kühl-Schmiermittels längs der Außenseite des Werkzeugs statt einer Führung durch einen zentralen Innenkanal besteht darin, dass auf diese Art und Weise das Futter genau so stark gekühlt wird wie das Werkzeug selbst, was bei dem besonderen Spannprinzip von Schrumpffuttern ja von erheblicher Bedeutung ist. Während es bei einem normalen Spannfutter mit Überwurf, Spannhülsen od. dgl. keine entscheidende Rolle spielt, wie die Temperatur des Futters und des Bohrers ist, abgesehen davon, dass die Temperatur nicht zu hoch liegen soll, wäre es ja bei einem Schrumpffutter für die Halterungswirkung fatal, wenn der Bohrer besonders stark gekühlt würde und das Schrumpffutter nicht, da dann ja während des Betriebs die Spannhalterung sich wieder lösen könnte.

Weitere Vorteile, Merkmale und Einzelheiten der Erfindung ergeben sich aus der nachfolgenden Beschreibung eines Ausführungsbeispiels sowie anhand der Zeichnung. Dabei zeigen:

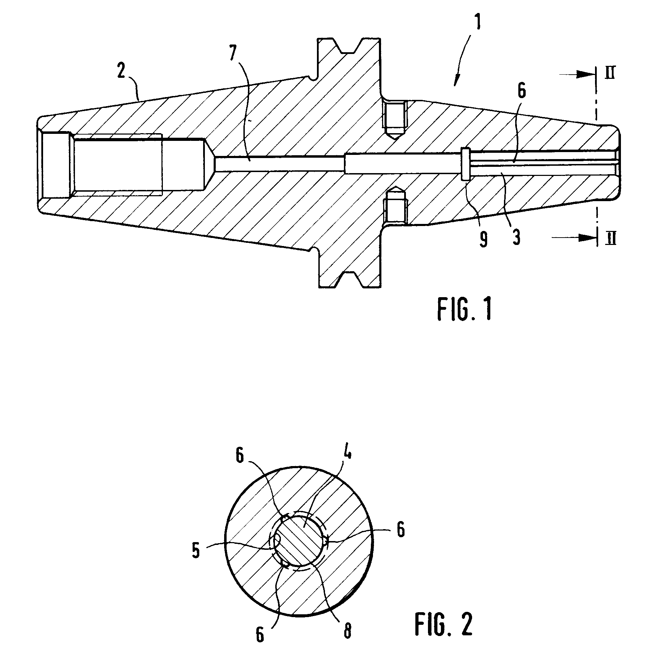

- Fig. 1: einen Längsschnitt durch ein erfindungsgemäß aufgebautes Schrumpffutter, und
- Fig. 2: einen vergrößerten Querschnitt längs der Linie II-II in Fig. 1.

Das in der Figur gezeigte Schrumpffutter 1 ist mit einem bekannten Steilkegelschaft 2 zur maschinenseitigen Aufspannung versehen und weist am vorderen Ende eine Aufnahmebohrung 3 zum Einsetzen eines Werkzeugs 4, beispielsweise eines Bohrer od. dgl., auf. Der Durchmesser der Aufnahmebohrung 3 ist so gehalten, dass durch Erwärmung des die Aufnahmebohrung 3 umfassenden vorderen Teils des Spannfutters die Aufnahmebohrung 3 auf einen Durchmesser gebracht werden kann, der größer ist als der Außendurchmesser des Spannschafts des Werkzeugs 4 im kalten Zustand. Dies ermöglicht es den Spannschaft des kalten Werkzeugs in die Aufnahmebohrung 3 des am vorderen Ende erwärmten Spannfutters einzuschieben. Durch anschließendes Abkühlen zieht sich das Spannfutter zusammen, die Aufnahmebohrung 3 wird im Durchmesser geringer und das Spannfutter klemmt das Werkzeug 4 fest ein. Von der Innenfläche 5 der Aufnahmebohrung 3 ausgehend sind im gezeigten Ausführungsbeispiel drei axiale Nuten 6 eingebracht - die nicht geradeaus laufen müssen, sondern auch spiralig verlaufen könnten - durch die Kühlmittel, das von hinten über einen Zuführkanal 7 herangebracht wird, längs des Außenmantels des Werkzeugs 4 nach vorne laufen kann. Dadurch wird sowohl das Werkzeug 4 als auch die Spannhülse im Spannbereich gekühlt. Gleichzeitig kann dann das vorne austretende KühlSchmiermittel auf die Bearbeitungsstelle des Werkzeugs am Werkstück gelangen. Bei 9 erkennt man einen Freistich zur besseren Verteilung des vom Zuführkanal ankommenden und in die Nuten 6 zu verteilenden Kühl-Schmiermittels.

## Patentansprüche

1. Rotierendes Futter mit einer Kühl-Schmiermitel-Zuführeinrichtung, die das Kühl-Schmiermitel von einem im Spannfutter für das Werkzeug, insbesondere einem Bohrer oder Fräser, angeordnete Zuführkanal längs des Außenmantels des Werkzeugs zu dessen Spitze leitet, dadurch gekennzeichnet, dass das Spannfutter (1) ein Schrumpffutter ist und dass in der Aufnahmebohrung (3) des Schrumpffutters (1) axiale, mit dem Zuführkanal (7) verbundene Nuten (6) angeordnet sind.
